# EUROPÄISCHE PATENTSCHRIFT

(11) **EP 1 866 168 B1**
(45) Veröffentlichungstag und Bekanntmachung des Hinweises auf die Patenterteilung: **24.04.2013**
(21) Anmeldenummer: 06707337.9
(22) Anmeldetag: 28.02.2006
(51) Int. Cl.: B42D 15/10

(54) **BUCHARTIGES DOKUMENT, INSBESONDERE IDENTIFIKATIONSDOKUMENT**
BOOK-TYPE DOCUMENT, IN PARTICULAR AN IDENTIFICATION DOCUMENT
DOCUMENT EN FORME DE LIVRE, NOTAMMENT DOCUMENT D'IDENTIFICATION

(30) Priorität: 03.03.2005 DE 202005003644 U; 22.04.2005 DE 102005018912; 28.04.2005 DE 102005020198
(43) Veröffentlichungstag der Anmeldung: 19.12.2007
(73) Patentinhaber: Bundesdruckerei GmbH, 10969 Berlin (DE)
(72) Erfinder: MÜLLER, Carsten, 14979 Kleinbeeren (DE); LORTZ, Michael, 13465 Berlin (DE)
(74) Vertreter: Maser, Jochen
(86) Internationale Anmeldenummer: PCT/EP2006/001833
(87) Internationale Veröffentlichungsnummer: WO 2006/092273

(56) Entgegenhaltungen:
- EP-A- 1 008 459
- EP-A- 1 502 765
- WO-A-2004/017265
- WO-A-2006/053679
- WO-A1-2004/074000
- DE-A1-102004 008 841

## Beschreibung

Die Erfindung betrifft ein buchartiges Dokument, insbesondere ein Identifikationsdokument oder Wertdokument, wie beispielsweise Pässe, buchartige Personalausweise, Führerscheine, vorläufige Personaldokumente, Sicherheitsdokumente, Zugangsberichtigungen oder dergleichen, bestehend aus einem Bucheinband und darin aufgenommene Innenseiten aus Papier und/oder Kunststoff,

Die Innenseiten werden mittels einer Naht am Vorsatz oder an der inneren Umschlagsseite befestigt. Das Vorsatz oder die innere Umschlagseite wird mit dem Bucheinband verbunden. Bei Identifikationsdokumenten umfassen die Innenseiten mindestens eine Personalisierungsdatenseite, auf der die wichtigsten Personendaten und das Bild des Inhabers zur Identifikation angeordnet sind. Weitere Daten können Eintragungen zum Inhaber oder freie Bereiche für spätere Eintragungen enthalten. Diese Personalisierungsdatenseiten werden auf einer Vorderseite und einer Rückseite mit einer Laminatschicht versehen, um eine Laminatschichtumhüllung auszubilden.

Die weiteren Innenseiten sind zumeist aus Papier ausgebildet und dienen dem Aufbringen von Stempeln und Visa.

Die Personalisierungsdatenseiten werden zusammen mit den weiteren Innenseiten vernäht und als Buchinhalt mit dem Bucheinband verklebt. Diese Ausführungsform weist den Nachteil auf, dass fertigungstechnisch eine Vielzahl von Arbeitsschritten erforderlich ist, um die Laminatschichten aufzubringen und eine vollständig geschlossene Laminatschichtumhüllung zu bilden. Darüber hinaus ist die Ausbildung des Faltbereiches einer solchen Laminatschichtumhüllung im Nahtbereich des Buchinhaltes durch die biegelastische Beanspruchung riss- oder bruchgefährdet und im Faltbereich relativ biegesteif ausgebildet.

Aus der WO 2004/017265 A1 geht ein Passbuch hervor, weiches einen Aufbau aufweist, der in der EP 1 008 459 A1 beschrieben ist. Dieses Passbuch umfasst eine Personalisierdatenseite, welche eine erste Schicht als Laminat umfasst, auf welche eine Datenseite des Passbuchinhabers aufgebracht ist. Dieses Laminat muss aufgrund dessen gewünschter Dicke und Steifigkeit über ein zusätzliches flexibles Band im Nahtbereich des Passbuches befestigt werden, wobei das flexible Band durch eine Art Verschluss an dem Laminat befestigt ist. Das Laminat besteht aus mehreren Polycarbonatschichten und ist hinreichend steif ausgebildet, so dass dieses Laminat nicht zum Vernähen mit zumindest einer Innenseite eines buchartigen Dokumentes geeignet ist. Diese Anordnung weist den Nachteil auf, dass eine einfache Austauschbarkeit der Trägeranordnung bzw. Personalisierdatenseite durch das Auftrennen der Verbindungsstelle zwischen der Personalisierdatenseite und dem flexiblen Band ermöglicht ist.

Aus der DE 10 2004 008 841 A1 geht ein buchartiges Wertdokument, insbesondere ein Identifikationsdokument hervor, welches einen Bucheinband aufweist. Diesem Bucheinband ist zumindest eine Trägeranordnung mit zumindest einer Transpondereinheit und Innenseiten zugeordnet. Diese Trägeranordnung sowie weitere Innenseiten sind mit einem Vorsatz vernäht. Aus der EP 1 502 765 A1 ist ein Buchlein mit einem pesonalisierten Datenblutt bekannt, wobei das personalisierten Datenblutt über eine flexible Schicht als Verbindungsmittel eingebracht ist.

Es besteht grundsätzlich ein erhebliches Interesse daran, buchartige Dokumente, insbesondere Identifikationsdokumente, vor Fälschungen zu schützen und die Herstellung von Fälschungen technisch unmöglich oder zumindest unrentabel zu machen. Gleichzeitig besteht ein erhebliches Interesse daran, die Herstellung von Wertdokumenten kostengünstig durchzuführen.

Der Erfindung liegt deshalb die Aufgabe zugrunde, ein buchartiges Dokument, insbesondere Identifikationsdokument, zu schaffen, bei dem ein hohes Maß an Fälschungssicherheit bei geringen Herstellungskosten gegeben ist.

Diese Aufgabe wird erfindungsgemäß durch ein buchartiges Dokument, insbesondere Identifikationsdokument, gemäß den Merkmalen des Hauptanspruchs gelöst. Weitere vorteilhafte Ausgestaltungen und Weiterbildungen der Erfindung sind in den weiteren abhängigen Ansprüchen angegeben.

Durch die erfindungsgemäße Ausgestaltung eines buchartigen Dokumentes, insbesondere Identifikationsdokument, bei dem die zumindest eine Trägeranordnung mit zumindest einer Datenseite vernäht ist und die Trägeranordnung als Prelaminat ausgebildet ist, welches auf zumindest einer Seite drucktechnisch behandelbar ist und als Personalisieruhgsdatenseite oder als Vorsatz zum Bucheinband oder Buchumschlag vorgesehen ist, wird eine Reduzierung der Herstellungskosten durch die Verringerung der Herstellungsschritte erzielt. Durch den Einsatz eines Prelaminates als Endprodukt, welches lediglich noch zu bedrucken ist, können weitere Bearbeitungsschritte, wie beispielsweise das Aufbringen von Laminierschichten, entfallen und gleichzeitig die Sicherheitsanforderungen zur Vermeidung von Fälschungen beibehalten werden. Durch die Trägeranordnung, welche auf zumindest einer Seite drucktechnisch behandelbar ist, kann das Prelaminat als Personalisierungsdatenseite oder Vorsatz bedruckt und personalisiert werden. Somit lassen sich beispielsweise kostengünstig Dokument- oder Passrohlinge herstellen, bei denen zur Fertigstellung bedarfsmäßig die Trägeranordnung zur Personalisierung drucktechnisch behandelt ist und in die Transpondereinheit einen ausgewählten Datensatz vom Inhaber des Dokumentes abgespeichert wird. Die Einbringung der Trägeranordnung in das buchartige Dokument als Prelaminat kann sowohl für eine Personalisierungsdatenseite als auch für einen Vorsatz zum Bucheinband oder Buchumschlag vorgesehen sein, wodurch verschiedene Aufbauten bei buchartigen Dokumenten unter Beibehaltung der Sicherheitsanforderungen und einer kostengünstigen Herstellung ermöglicht ist.

Nach einer vorteilhaften/ Ausgestaltung der Erfindung ist vorgesehen, dass die als Prelaminat vorgesehene Trägeranordnung eine Trägerschicht zur Aufnahme von zumindest einer Trahspondereinheit und zumindest eine die Transpondereinheit überdeckende Schicht aufweist, welche unlösbar miteinander verbunden sind. Dadurch wird sichergestellt, dass eine Manipulation durch Ablösen einer Deck- oder Trägerschicht und Herausnahme oder Austausch der Transpondereinheit verhindert ist. Die unlösbare Verbindung kann durch Kalt- oder Heißkleben, Laminieren, Verschweißen und/oder eine chemische Reaktion zur zumindest teilweise stofflöslichen Verbindung ermöglicht sein. Ebenso besteht eine unlösbare Verbindung darin, dass beim Versuch zum Ablösen der Deckschicht von der Trägerschicht oder umgekehrt ein bruchstückhaftes Lösen der Trägerschicht oder der Deckschicht aufgrund der Strukturierung einer Schicht erfolgt.

Zur Ausbildung eines gut faltbaren Nahtbereiches im buchartigen Dokument ist vorteilhafterweise vorgesehen, dass die als Prelaminat vorgesehene Trägeranordnung einen Bereich mit nur einer Schicht umfasst, die beim Einbringen oder Anordnen der Trägeranordnung im buchartigen Dokument dem Nahtbereich zugeordnet ist. Dadurch kann eine Biegebruchgefahr erheblich minimiert werden. Zudem kann eine Verringerung der Dicke im Faltbereich erzielt werden. Bevorzugt ist die die Transpondereinheit aufnehmende Schicht im Nahtbereich vorgesehen und die Deckschicht mit einem ausgestanzten Bereich versehen beziehungsweise die Deckschicht endet vor dem Nahtbereich.

Die als Prelaminat vorgesehene Trägeranordnung, welche als Personalisierungsdatenseite eingesetzt wird, weist vorteilhafterweise eine dem Nahtbereich gegenüberliegende Lasche oder eine vollständige Datenseite auf. Durch die zumindest eine drucktechnisch behandelbare Oberfläche weist das Prelaminat dieselbe Funktion wie eine Datenseite auf und kann zur Aufnahme von Stempeln oder Visa dienen.

Die als Prelaminat vorgesehene Trägeranordnung, die gemäß einer alternativen Ausgestaltung als Vorsatz im buchartigen Wertdokument eingebracht ist, kann sich vollständig über beide Innenseiten des Bucheinbandes oder Buchumschlages erstrecken oder zumindest auf einer Innenseite und im Nahtbereich des Bucheinbandes oder Buchumschlages vorgesehen sein.

Die als Prelaminat vorgesehene Trägeranordnung weist zumindest eine flexible und reißfeste Schicht auf. Dadurch kann ein Heraustrennen oder Zerstören der Schicht nur mit erheblicher Kraft und Beschädigungen erfolgen. Vorteilhafterweise ist diese flexible Schicht schwer zerreißbar ausgebildet. Die zumindest eine weitere Schicht, welche die zumindest eine Transpondereinheit abdeckt, ist bevorzugt ebenfalls flexibel ausgebildet, so dass das Prelaminat als papier- oder folienähnliche Anordnung ausgebildet ist, welche eine Schichtdicke ähnlich zu einem Papier oder Folie der Datenseite aufweist.

Nach einer weiteren vorteilhaften Ausgestaltung der Erfindung ist vorgesehen, dass die Trägeranordnung zumindest eine Trägerschicht und zumindest eine Deckschicht umfasst, wobei zumindest eine der beiden Schichten aus thermoplastischem Material, wie Polycarbonat, aus thermoplastischem Elastomer, aus duroplastischem Material, aus Papier, Papier-Vliesfasern, Faservlies, kaschiertem und/oder verpressten Papier und/oder Vliesmaterial, Verbundmaterial, Verbundmaterialien aus Vliesstoffen und/oder thermoplastischen Elastomeren, Kautschuk, Latex und/oder Naturstoffen hergestellt ist.

Nach einer weiteren vorteilhaften Ausgestaltung der Erfindung ist vorgesehen, dass zumindest eine Schicht der als Prelaminat ausgebildeten Trägeranordnung eine folienartige, papierartige, gewebe-, vliesartige, glatte, geprägte oder strukturierte Oberfläche aufweist. Dadurch kann eine Flexibilität für unterschiedliche Ausgestaltungsformen ermöglicht sein, wobei die Aufbringung von Personalisierungsdaten gegeben ist.

Bevorzugt ist vorgesehen, dass die zumindest eine Schicht durch ein Offset-, Buch-, Sieb-, Tampon-, Präge-, Laser- oder Tintenstrahldruckverfahren drucktechnisch behandelbar ist. Durch sich an das Druckverfahren anschließende Trocknungstechniken können die verschiedenen Druckverfahren ausgewählt und kurze Produktionszeiten erzielt werden.

Das Prelaminat kann bevorzugt weitere Sicherheitsmerkmale durch Ausstanzungen, Anstanzungen, Schlitzungen, Perforationen, Prägungen oder eine Kombination hiervon aufweisen. Dadurch sind weitere Sicherheitsmerkmale in einfacher Weise dem Prelaminat hinzuzufügen, wodurch die Fälschungssicherheit weiter erhöht wird.

Des Weiteren ist erfindungsgemäß vorgesehen, dass eine Trägeranordnung mit zumindest einer Trägerschicht und zumindest einer Deckschicht sowie dazwischen liegend mit zumindest einer Transpondereinheit als Prelaminat ausgebildet ist, welches als personalisiertes Dokument vorgesehen ist oder als Personalisierungsdatenseite oder als Sticker in ein buchartiges Dokument oder ein Wertdokument ein- oder aufbringbar ist. Dieses Prelaminat, welches ein Zwischenprodukt ist, kann somit in kostengünstiger Weise zur Weiterverarbeitung eingesetzt werden.

Vorteilhafterweise ist vorgesehen, dass die als Prelaminat ausgebildete Trägeranordnung auf zumindest einer Seite drucktechnisch zur Herstellung eines Visas behandelbar ist und durch eine Heiß- oder Kaltklebeverbindung auf einer Datenseite oder Innenseite eines buchartigen Dokumentes oder Wertdokumentes positionierbar ist. Somit können solche Prelaminate nicht nur zum Einbinden in ein buchartiges Wertdokument, sondern auch als Visa oder Sticker verwendet und eingesetzt werden. Durch die Bedruckbarkeit kann dieses Zwischenprodukt in einfacher Weise als Endprodukt fertiggestellt werden. Die vorbeschriebenen Ausführungsformen und Varianten des Prelaminats sind ebenfalls für die Ausgestaltung eines Stickers möglich.

Das Prelaminat als Zwischenprodukt wird bevorzugt durch einen oder mehrere Bearbeitungsschritte, wie Bedrucken, Beschriften, Bekleben, Perforieren, Prägen, Stanzen, Anstanzen oder Stanzen zum Endprodukt verarbeitet und bildet ein personalisiertes Dokument. Weitere Bearbeitüngsschritte zur Veredelung des Prelaminats, wie beispielsweise das Aufbringen einer Hologrammfolie oder weiterer Individualisierungsbestandteile, sind möglich.

Bevorzugt wird ein zu personalisierendes Dokument oder das personalsierte Dokument in einem ID1- oder ID2-Format hergestellt. Ebenfalls können auch andere Formate oder Zwischenformate gewählt werden. Die vorbeschriebenen Ausführungsformen und Alternativen einer Trägeranordnung in einem buchartigen Dokument können auch für ein personalisiertes Dokument verwendet werden.

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: Eine perspektivische Darstellung eines erfindungsgemäßen buchartigen Identifikationsdokumentes,
- Figur 2: eine schematische Schnittdarstellung der Dokumente gemäß Figur 1 und
- Figur 3: eine schematische Schnittdarstellung einer alternativen Ausgestaltung eines buchartigen Identifikationsdokumentes.

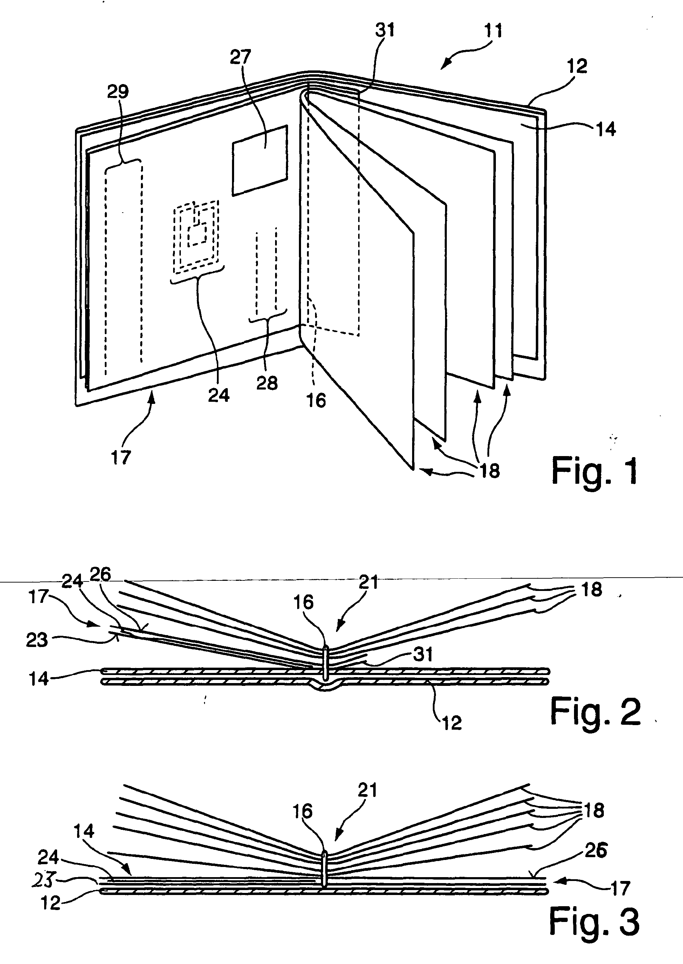

In Figur 1 ist ein buchartiges Dokument 11 dargestellt. Bei diesem Dokument 11 handelt es sich beispielsweise um ein Identifikationsdokument wie ein Reisepass oder einen Personalausweis. Das Dokument 11 umfasst einen Bucheinband 12. Auf einer Innenseite des Bucheinbandes 12 ist ein Vorsatz 14 vorgesehen, der an dem Bucheinband 12 befestigt ist. Über eine gemeinsame Naht 16 ist eine Trägeranordnung 17 mit Innenseiten 18 mit einem Vorsatz 14 verbunden. Die Innenseiten 18 des buchartigen Dokumentes 11 dienen zur Aufnahme von Visa oder Stempeln oder sonstigen Eintragungen

In Figur 2 ist eine schematische Schnittdarstellung des buchartigen Dokumentes 11 gemäß Figur 1 dargestellt. Der in Figur 2 dargestellte Aufbau des Bucheinbandes 12 ist nur beispielhaft. Der Bucheinband 12 wird durch eine Vorder- und Rückseite gebildet, die durch eine Rillung im Nahtbereich 21 zusammenfaltbar ausgebildet ist. Die Vorder- und Rückseite kann aus einem verstärkten Papier, einer Pappe, einer Kunststofffolie oder einer Kombination hiervon ausgebildet sein. Alternativ kann der Bucheinband 12 einen mehrschichtigen Aufbau umfassen, bei dem die Vorder- und Rückseite durch eine Buchdeckeneinlage ausgebildet ist, welcher im Nahtbereich zusätzlich mit einem Rücken versehen sein kann. Auf die Buchdecke wird das Vorsatz 14 aufgebracht.

Die in Figur 2 dargestellte Ausführungsform stellt eine in der Fertigung kostenreduzierte Ausführungsform dar. Hierzu ist die Trägeranordnung 17 aus einem Prelaminat gebildet. Bei solchen Prelaminaten handelt es sich um Zwischenprodukte, die zur Weiterverarbeitung vorgesehen sind. Beispielsweise werden diese Prelaminate in eine Chipkarte durch ein Druckgussverfahren oder eine Laminiertechnik komplett eingearbeitet. Eine auf einer Trägerschicht aufgebrachte Deckschicht dient lediglich zum Schutz vor Verschmutzungen. Derartige Zwischenprodukte, die bedarfsmäßig modifiziert sein können, werden erfindungsgemäß als Endprodukt in einem buchartigen Dokument verarbeitet und eingesetzt. Die Trägeranordnung 17 umfasst eine folienartige Trägerschicht 23, auf welcher zumindest eine Transpondereinheit 24 zum kontaktlosen Ein- und Auslesen von Daten, wie beispielsweise Dokumentnummer, Dokumentinhaber, weitere personenspezifische Daten, aufgebracht ist. Auf diese Trägerschicht 23 ist zumindest eine Deckschicht 26 schwer lösbar von der Trägerschicht 23 aufgebracht. Zumindest eine Außenseite der Trägeranordnung 17 ist drucktechnisch behandelbar. Auf dieser werden gemäß dem Ausführungsbeispiel in Figur 1 und 2 ein Dekor und/oder Personalisierungsdaten aufgebracht. Bevorzugt wird zunächst das Dekor aufgebracht, sofern es erforderlich ist und anschließend die Personalisierungsdaten. Beispielsweise können Offset-, Buch-, Sieb-, Tampon-, Präge-, Laser- Tintenstrahl- oder Sicherheitsunterdruckverfahren eingesetzt werden. Es wird ein Rohling eines buchartigen Dokumentes hergestellt bei dem die Trägeranordnung 17 im buchartigen Dokument 11 enthalten ist, so dass eine nachträgliche Personalisierung der Trägeranordnung 17 als auch der in der Trägeranordnung 17 enthaltenen zumindest einen Transpondereinheit 24 ermöglicht ist. In dem Bucheinband 12 kann zusätzlich zur zumindest einen in der Trägeranordnung 17 angeordneten Transpondereinheit 24 zumindest eine weitere Transpondereinheit vorgesehen sein. Die Personalisierungsdaten oder weitere Daten können redundant und/oder aufgeteilt und miteinander verknüpft in den zumindest zwei Transpondereinheiten 24 abgespeichert und hinterlegt sein.

Die Trägeranordnung 17 ist als Einlegeblatt ausgebildet. Eine Seite kann gemäß dem ICAO-Standard ausgebildet sein. Es können ein Foto des Dokumenteninhabers, eine OCR-maschinenlesbare ICAO-Zeile 29 und weitere Personalisierungsdaten 28 aufgebracht sein. Die Trägeranordnung 17 kann gemäß dem Ausführungsbeispiel eine Lasche 31 umfassen, die sich über den Nahtbereich 21 hinaus erstreckt. Alternativ kann anstelle der Lasche 31 eine vollständige Datenseite 18 vorgesehen sein. Die Transpondereinheit 24 ist beispielhaft innerhalb einer Datenseite 18 angeordnet. Alternativ kann die Transpondereinheit 24 im Randbereich vorgesehen sein oder sich auch über den Nahtbereich 21 erstrecken.

Die Trägerschicht 23 besteht beispielsweise aus thermoplastischem Material wie Polycarbonat oder thermoplastischen Elastomer, aus einem thermoplastischen oder duroplastischen Material und ist reißfest ausgebildet. Zusätzlich können zur Erhöhung der Reißfestigkeit Gewebe oder Vliese vorgesehen sein.

Die zumindest eine Transpondereinheit 24 ist auf die Trägerschicht 23 aufgeklebt, aufgepresst oder zumindest aufgelegt. Die zumindest eine Deckschicht 26, die zumindest eine Transpondereinheit 24 zur Trägerschicht 23 fixiert und gegebenenfalls zusätzlich positioniert, kann aus einem Material hergestellt sein, welches zumindest abschnittsweise schwer lösbar zur Trägerschicht 23 vorgesehen ist. Beispielsweise kann die Deckschicht 26 aus dem Material der Trägerschicht 23 für einen seitengleichen Aufbau vorgesehen sein. Des Weiteren kann die Deckschicht 26 aus einem Faservlies, Papiervlies, kaschierten und/oder verpressten Papier und/oder Vliesmaterial, Verbundmaterialien aus Vliesstoffen und/oder thermoplastischen Elastomeren ausgebildet sein. Zumindest eine Oberfläche der Trägeranordnung 17 ist technisch bedruckbar, so dass die Trägeranordnung 17 als Personalisierungsdatenseite mit Personalisierungsdaten zu vervollständigen ist.

Ein seitengleicher Aufbau einer Trägeranordnung 17 kann beispielsweise darin bestehen, dass eine papierartige Oberfläche auf einer PE-Schicht aufgebracht ist beziehungsweise eine PE-Schicht mit einer papierartigen Oberfläche beschichtet ist. Auf die PE-Schicht wird die Transpondereinheit 24 aufgebracht. Diese wird wiederum durch eine PE-Schicht abgedeckt, die mit einer papierartigen Schicht versehen oder beschichtet ist. Anstelle einer papierartigen Beschichtung können eine gewebeartige, eine folienartige, glatte, geprägte oder eine strukturierte Beschichtung oder Oberfläche verschiedener Materialien vorgesehen sein. Alternativ kann auch ausschließlich eine unbeschichtete Träger- oder Deckschicht aus gleichem oder unterschiedlichem Material ausgebildet sein.

Im Nahtbereich 21 ist die Trägeranordnung 17 bevorzugt einlagig ausgebildet. Die reißfeste Trägerschicht 23 oder Deckschicht 26 erstreckt sich entlang des Nahtbereiches 21, so dass darin die Naht 16 eingebracht ist. Alternativ kann auch vorgesehen sein, dass die Trägeranordnung 17 als Prelaminat mit einer Trägerschicht 23 und zumindest einer Deckschicht 26 sich vollständig über den Nahtbereich 16 erstreckt.

In Figur 3 ist eine alternative Ausführungsform in einer Schnittdarstellung zu Figur 2 dargestellt. Die Trägeranordnung 17 ist mit einem Bucheinband 12 verbunden. Eine zu den Innenseiten 18 weisende Oberfläche der Trägeranordnung 17 ist als Vorsatz 14 ausgebildet, welches gleichzeitig auch die Personalisierungsdatenseite umfassen kann. Derartige Ausführungsformen können beispielsweise als Führerschein oder Zugangsberechtigung sowie als weitere Personaldokumente eingesetzt werden. Die Trägeranordnung 17 wird bevorzugt mit der die zumindest eine Transpondereinheit 24 aufnehmenden Trägerschicht 23 auf dem Bucheinband 12 verklebt. Die Deckschicht 26 bildet das Vorsatz 14. Im Ausführungsbeispiel erstreckt sich die Trägeranordnung 17 vollständig über den Bucheinband 12 und bildet das Vorsatz 14 für die innere Vorder- und Rückseite des Bucheinbandes 12. Alternativ kann die Trägeranordnung 17 sich auch nur über die innere Vorder- oder innere Rückseite des Bucheinbandes 12 bis in den Nahtbereich 21 erstrecken, so dass die Trägeranordnung 17 zu den Innenseiten 18 mit der zumindest einen Naht 16 verbunden ist.

Durch die erfindungsgemäße Verwendung eines Prelaminats als Trägeranordnung 17 kann in kostengünstiger Weise unter Weglassung vieler Herstellungsschritte, wie beispielsweise das Aufbringen von Laminatschichten und der Bildung einer Laminatschichtumhüllung, eine kostengünstige Herstellung erzielt werden. Gleichzeitig ist ermöglicht, dass Rohlinge für buchartige Dokumente kostengünstig herstellbar sind, die zu einem späteren Zeitpunkt mit Personalisierungsdaten als auch Registriernummern beziehungsweise Passnummern oder weiteren Personenidentifikationsnummern versehen werden.

## Patentansprüche

1. Buchartiges Dokument, insbesondere Identifikationsdokument, mit einem Bucheinband (12) oder Buchumschlag, welcher zumindest eine Trägeranordnung (17) mit zumindest einer Transpondereinheit (24) und Innenseiten (18) umfasst, die in den Bucheinband (12) oder Buchumschlag aufgenommen sind, bei welchem zumindest eine Trägeranordnung (17) mit zumindest einer Innenseite (18) vernäht ist, wobei die zumindest eine Trägeranordnung (17) aus einem Prelaminat ausgebildet ist, welches eine Trägerschicht (23) zur Aufnahme der zumindest einen Transpondereinheit (24) und zumindest eine die Transpondereinheit (24) überdeckende Deckschicht (26) aufweist, welche schwer lösbar mit der Trägerschicht (23) verbunden ist, **dadurch gekennzeichnet dass** ein Nahtbereich (21) der Trägeranordnung (17) durch die Trägerschicht (23) ausgebildet ist und dass das Prelaminat als Endprodukt einsetzbar und als Personalisierungsdatenseite oder Vorsatz (14) zum Bucheinband (12) oder Buchumschlag vorgesehen ist, so daß ein Dokumenten- oder Paßrohling hergestellt ist wobei die Trägeranordnung (17) ein Dokumenten oder Paßrohling zur Personalisierung auf zumindest einer Seite drucktechnisch behandelbar ist und in der Transpondereinheit ein Datensatz vom Inhaber des buchartigen Dokumentes abspeicherbar ist.

2. Buchartiges Dokument nach Anspruch 1, **dadurch gekennzeichnet, dass** die Deckschicht (26) und die Trägerschicht (23) ohne teilweise Zerstörung nicht lösbar miteinander verbunden sind.

3. Buchartiges Dokument nach einem der vorhergehenden Ansprüche, **dadurch gekennzeichnet, dass** die als Personalisierdatenseite vorgesehene Trägeranordnung (17) dem Nahtbereich (21) gegenüberliegend als eine Lasche (31) oder Innenseite (18) ausgebildet ist.

4. Buchartiges Dokument nach einem der vorhergehenden Ansprüche, **dadurch gekennzeichnet, dass** die als Vorsatz (14) vorgesehene Trägeranordnung (17) sich zumindest teilweise bis in den Nahtbereich (21) oder vollständig auf der inneren Vorder- oder Rückseite des Bucheinbandes (12) oder Buchumschlages erstreckt.

5. Buchartiges Dokument nach einem der vorhergehenden Ansprüche, **dadurch gekennzeichnet, dass** zumindest eine Schicht (23, 26) der Trägeranordnung (17) aus einem flexiblen und reißfesten, vorzugsweise aus einem schwer zerreißbaren Material besteht.

6. Buchartiges Dokument nach einem der vorhergehenden Ansprüche, **dadurch gekennzeichnet, dass** die Trägeranordnung (17) zumindest eine Trägerschicht (23) und zumindest eine Deckschicht (26) umfasst, wobei zumindest eine der beiden Schichten (23, 26) aus thermoplastischem Material, wie Polycarbonat, aus thermoplastischem Elastomer, aus duroplastischem Material, aus Papier, Papier-, Vliesfasern, Faservlies, kaschiertem und/oder verpressten Papier und/oder Vliesmaterial, Verbundmaterial, Verbundmaterialien aus Vliesstoffen und/oder thermoplastischen Elastomeren, Kautschuk, Latex und/oder Naturstoffen hergestellt ist.

7. Buchartiges Dokument nach einem der vorhergehenden Ansprüche, **dadurch gekennzeichnet, dass** zumindest eine Schicht (23, 26) der Trägeranordnung (17) eine folienartige, papierartige, gewebeartige, vliesartige, glatte, geprägte oder strukturierte Oberfläche aufweist.

8. Buchartiges Dokument nach einem der vorhergehenden Ansprüche, **dadurch gekennzeichnet, dass** zumindest eine Schicht (23, 26) der Trägeranordnung (17) durch ein Offset-, Buch-, Sieb-, Tampon-, Präge-, Laser-, Tintenstrahl- oder Sicherheitsunterdruckverfahren drucktechnisch behandelbar ist.

9. Buchartiges Dokument nach einem der vorhergehenden Ansprüche, **dadurch gekennzeichnet, dass** die als Trägeranordnung (17) ausgebildeten Prelaminate weitere Sicherheitsmerkmale durch Anstanzungen, Schlitzungen, Perforationen, Prägungen oder eine Kombination hiervon aufweisen.

10. Trägeranordnung für ein buchartiges Identifikationsdokument mit Zumindest einer Transpondereinheit (24) beiden die Trägeranordnung (17) aus einem Prelaminat mit einer Trägerschicht (23) zur Aufnahme der zumindest einen Transpondereinheit (24) und zumindest einer die Transpondereinheit (24) überdeckenden Deckschicht (26) ausgebildet ist, welche schwer lösbar miteinander verbunden sind, und auf zumindest einer Seite drucktechnisch behandelbar ist **dadurch gekennzeichnet, dass** ein Nahtbereich (21) der Trägeranordnung (17) durch die Trägerschicht (23) ausgebildet ist und dass das Prelaminat als Endprodukt für ein Dokumenten- oder Paßrohling vorgesehen ist und als Personalisierungsdatenseite (17) in einem buchartigen Dokumenten- oder Paßrohling ist.

11. Trägeranordnung nach Anspruch 10, **dadurch gekennzeichnet, dass** das Prelaminat zumindest durch Bedrucken, Beschriften, Bekleben, Perforieren, Prägen, Stanzen, Anstanzen oder Schlitzen zum Endprodukt als personalisiertes Dokument herstellbar ist.

12. Trägeranordnung nach Anspruch 10, **dadurch gekennzeichnet, dass** das zu personalisierende Dokument oder das personalisierte Dokument im ID1- oder ID2-Format herstellbar ist.

## Claims

1. A book-type document, in particular an identification document, having a book binding (12) or book cover, which comprises at least one carrier system (17) having at least one transponder unit (24) and internal pages (18), which are accommodated in the book binding (12) or book cover, wherein at least one carrier system (17) is stitched to at least one internal page (18), and the at least one carrier system (17) is formed as a prelaminate which has a carrier layer (23) to accommodate the at least one transponder unit (24) and at least one top layer (26) covering the transponder unit (24), which is connected to the carrier system (17), such that they are difficult to detach, **characterized in that** a seam area (21) of the carrier system (17) is formed by a carrier layer (23) and is used as an end product as a personalization data page or end paper (14) for the book binding (12) or book cover, so that a document or passport blank is produced, wherein the carrier system (17) in the document or passport blank is treatable for personalization by printing on at least one side and in the transponder unit is stored a data set of the holder of the book-type document.

2. The book-type document as claimed in claim 1, **characterized in that** the top layer (26) and the carrier layer (23) are connected to each other such that they cannot be detached without partial destruction.

3. The book-type document according to one of the preceding claims, **characterized in that** the carrier system (17) provided as a personalization data page opposite the seam area (21) is formed as a flap (31) or internal page (18).

4. The book-type document according to one of the preceding claims, **characterized in that** the carrier system (17) provided as an end paper (14) extends at least partly as far as the seam area (21) or completely on the inner front or rear side of the book binding (12) or book cover.

5. The book-type document according to one of the preceding claims, **characterized in that** at least one layer (23, 26) of the carrier system (17) consists of a material that is flexible and tear-resistant, preferably of a material that is difficult to tear.

6. The book-type document according to one of the preceding claims, **characterized in that** the carrier system (17) comprises at least one carrier layer (23) and at least one top layer (26), at least one of the two layers (23, 26) being produced from thermoplastic material, such as polycarbonate, from thermoplastic elastomer, from thermosetting material, from paper, paper-nonwoven fibers, fibrous nonwoven, laminated and/or pressed paper and/or nonwoven material, composite material, composite materials made of nonwoven substances and/or thermoplastic elastomers, rubber, latex and/or natural substances.

7. The book-type document according to one of the preceding claims, **characterized in that** at least one layer (23, 26) of the carrier system (17) has a film-like, paper-like, fabric-like, nonwoven-like, smooth, embossed or structured surface.

8. The book-type document according to one of the preceding claims, **characterized in that** at least one layer (23, 26) of the carrier system (17) is capable of treatment by means of an offset, book, screen, pad, embossing, laser, inkjet or security underprinting printing process.

9. The book-type document according to one of the preceding claims 1, **characterized in that** the prelaminate formed as a carrier system (17) has further security features as a result of kiss-cut portions, slits, perforations, embossments or a combination thereof.

10. A carrier system for a book-type identification document having at least one transponder unit (24), the carrier system (17) is formed by a prelaminate having a carrier layer (23) to accommodate at least one transponder unit (24) and at least one top layer (26) covering the transponder unit (24), which are connected to each other, such that they are difficult to detach and is treatable by printing on at least one side, **characterized in that** a seam area (21) of the carrier system (17) is formed by a carrier layer (23), and that the prelaminate is used as an end product for a document or passport blank as a personalization data page (17) stitchable in a document or passport blank.

11. The carrier system as claimed in claim 10, **characterized in that** the prelaminate is produced at least by means of printing, labeling, pasting, perforating, embossing, punching, kiss-cutting or slitting, to form the end product as a personalized document.

12. The carrier system as claimed in claim 10, **characterized in that** the document to be personalized or the personalized document is produced in the ID1 or ID2 format.

## Revendications

1. Document de type livre, notamment document d'identification, comprenant une reliure de livre (12) ou une couverture de livre qui comprend au moins un agencement de support (17) avec au moins un module de transpondeur (24) et des pages internes (18) qui sont reçues dans la reliure de livre (12) ou la couverture de livre, pour lequel au moins un agencement de support (17) avec au moins une page interne (18) cousu, dans lequel l'au moins un agencement de support (17) est réalisé à partir d'un stratifié préalable qui présente une couche de support (23) pour recevoir l'au moins un module de transpondeur (24) et au moins une couche de recouvrement (26) recouvrant le module de transpondeur (24) qui est reliée de manière difficilement amovible à la couche de support (23), **caractérisé en ce qu'**une région de couture (21) de l'agencement de support (17) est réalisée par la couche de support (23) et que le stratifié préalable peut être inséré en tant que produit final et est prévu en tant que page de données de personnalisation ou feuilles de garde (14) à la reliure de livre (12) ou la couverture de livre de sorte qu'une ébauche de document ou de passeport est fabriquée, dans lequel l'agencement de support (17) peut être manipulé par une technique d'impression dans l'ébauche de document ou de passeport pour la personnalisation sur au moins une page et un ensemble de données du détenteur du document de type livre peut être enregistré dans le module de transpondeur.

2. Document de type livre selon la revendication 1, **caractérisé en ce que** la couche de recouvrement (26) et la couche de support (23) sont reliées ensemble de manière non amovible sans destruction partielle.

3. Document de type livre selon l'une quelconque des revendications précédentes, **caractérisé en ce que** l'agencement de support (17) prévu en tant que page de données de personnalisation est réalisé opposé à la région de couture (21) en tant que languette (31) ou page interne (18).

4. Document de type livre selon l'une quelconque des revendications précédentes, **caractérisé en ce que** l'agencement de support (17) prévu en tant que feuilles de garde (14) s'étend au moins partiellement jusque dans la région de couture (21) ou entièrement sur la page avant ou arrière interne de la reliure de livre (12) ou de la couverture de livre.

5. Document de type livre selon l'une quelconque des revendications précédentes, **caractérisé en ce qu'**au moins une couche (23, 26) de l'agencement de support (17) se compose d'un matériau flexible et résistant à la déchirure, de préférence d'un matériau difficilement déchirable.

6. Document de type livre selon l'une quelconque des revendications précédentes, **caractérisé en ce que** l'agencement de support (17) comprend au moins une couche de support (23) et au moins une couche de recouvrement (26), dans lequel au moins une des deux couches (23, 26) est fabriquée en un matériau thermoplastique, comme du polycarbonate, en un élastomère thermoplastique, en un matériau thermodurcissable, en papier, fibres de papier, fibres non tissées, non-tissé en fibres, papier et/ou matériau non tissé laminé et/ou comprimé, matériau composite, matériaux composites constitués de substances non tissées et/ou d'élastomères thermoplastiques, caoutchouc, latex et/ou substances naturelles.

7. Document de type livre selon l'une quelconque des revendications précédentes, **caractérisé en ce qu'**au moins une couche (23, 26) de l'agencement de support (17) présente une surface de type film, de type papier, de type tissu, de type non-tissé, lisse, gaufrée ou structurée.

8. Document de type livre selon l'une quelconque des revendications précédentes, **caractérisé en ce qu'**au moins une couche (23, 26) de l'agencement de support (17) peut être manipulée par une technique d'impression par un procédé d'impression offset, d'imprimerie, de sérigraphie, d'impression par tampon, d'impression sur plaque d'acier, d'impression laser, d'impression à jet d'encre ou d'impression de titres.

9. Document de type livre selon l'une quelconque des revendications précédentes, **caractérisé en ce que** les stratifiés préalables réalisés en tant qu'agencement de support (17) présentent d'autres caractéristiques de sécurité par poinçonnages, fentes, perforations, estampages ou une combinaison de ceux-ci.

10. Agencement de support pour un document d'identification de type livre comprenant au moins un module de transpondeur (24), pour lequel l'agencement de support (17) est réalisé à partir d'un stratifié préalable avec une couche de support (23) pour recevoir l'au moins un module de transpondeur (24) et au moins une couche de recouvrement (26) recouvrant le module de transpondeur (24) qui sont reliées de manière difficilement amovible l'une à l'autre, et peut être manipulé par une technique d'impression sur au moins une page, **caractérisé en ce qu'**une région de couture (21) de l'agencement de support (17) est réalisée par la couche de support (23) et que le stratifié préalable est prévu en tant que produit final pour une ébauche de document ou de passeport et peut être cousu en tant que page de données de personnalisation (17) dans une ébauche de document ou de passeport de type livre.

11. Agencement de support selon la revendication 10, **caractérisé en ce que** le stratifié préalable peut être fabriqué au moins par impression, inscription, collage, perforation, estampage, découpage, poinçonnage ou entaillage pour devenir le produit final en tant que document personnalisé.

12. Agencement de support selon la revendication 10, **caractérisé en ce que** le document à personnaliser ou le document personnalisé peut être fabriqué au format ID1 ou ID2.
